# EUROPEAN PATENT APPLICATION

(11) **EP 4 383 479 A1**
(43) Date of publication of application: **12.06.2024**
(21) Application number: 22852354.4
(22) Date of filing: 05.08.2022
(51) Int. Cl.: H01R 13/73, H01R 13/40, H01R 13/502

(54) **CHARGING STAND AND AUTOMOBILE**

(30) Priority: 06.08.2021 CN 202110904487
(71) Applicant: Changchun Jetty Automotive Technology Co., Ltd., Changchun City, Jilin Province 130000 (CN)
(72) Inventor: WANG, Chao, Changchun, Jilin 130000 (CN)
(74) Representative: Boult Wade Tennant LLP
(86) International application number: PCT/CN2022/110621
(87) International publication number: WO 2023/011643

(57) **Abstract**

The present invention provides a charging socket and an automobile. The charging socket includes: a device fixed to an automobile body, on which a mounting hole is disposed; a current connector partially disposed in the mounting hole; an electrical connection device disposed in the current connector; a cable partially disposed in the current connector; and a detachable mechanism configured to detachably fix the current connector, a part of the cable and the electrical connection device to the device fixed to the automobile body. According to the present invention, the technical problem of complicated maintenance work when the electrical connection device of the charging socket is damaged is solved.

## Description

### RELATED APPLICATION

The present disclosure claims priority to Chinese Patent Application No. 202110904487.6, entitled "Charging socket and Automobile" as filed on August 6, 2021.

### TECHNICAL FIELD

The present disclosure relates to the connection field of electrical connection elements, in particular to a charging socket and an automobile.

### BACKGROUND

New energy batteries of new energy automobiles use a charging system to replenish energy. A charging socket in the charging system includes: a device fixed to an automobile body, a cable and an electrical connection device. The device fixed to the automobile body has a rear cover, and the device fixed to the automobile body is mounted on an automobile, the electrical connection device is connected to the cable, a fixing clip fixes the electrical connection device to the device fixed to the automobile body, the rear cover is fixed on the device fixed to the automobile body, and the cable passes through the rear cover.

The electrical connection device of the charging socket may be partially damaged due to excessive plugging and unplugging or due to a short circuit. In a case where the electrical connection device is repaired and replaced, all the cables of the charging socket need to be removed from the automobile body, then the rear cover of the charging socket is removed, the fixing clip is removed, and the electrical connection device connecting the cable is taken out.

Since the electrical connection device is usually crimped or welded to the cable, the damaged electrical connection device needs to be cut off; and the cable may also be replaced as needed due to the lack of margin for repair in the cable length setting. The charging socket needs to be repaired only after an exterior of the entire cable and an adhesive tape are removed, long man-hours are required and a plurality of parts are disassembled as needed. More often than not, the charging socket may be entirely replaced with high maintenance cost.

Therefore, in the connection field of electrical connection elements, there is an urgent need for a charging socket that does not need to remove the entire charging socket for maintenance, in which only a part of the structure needs to be removed and only the damaged electrical connection device is replaced in a simple maintenance process which is easy to operate, short in man-hours and low in maintenance cost.

### SUMMARY

An objective of the present disclosure is to provide a charging socket and an automobile, in order to solve the technical problem of cumbersome maintenance work when the electrical connection device of the charging socket is damaged.

The objective of the present disclosure may be achieved in the technical solutions as follows:
The present disclosure provides a charging socket including:
a device fixed to an automobile body, on which a mounting hole is disposed;
a current connector partially disposed in the mounting hole;
an electrical connection device disposed in the current connector;
a cable partially disposed in the current connector; and
a detachable mechanism configured to detachably fix the current connector, a part of the cable and the electrical connection device to the device fixed to the automobile body.

The present disclosure provides an automobile, including the charging socket mentioned above.

The present disclosure has features and advantages as follows:
in the charging socket, in a case where the electrical connection device is damaged, only the rear cover of the charging socket needs to be removed, then the electrical connection device and the cable are removed from the charging socket, the electrical connection device is replaced and then mounted without removing the entire charging socket or replacing the cable, thereby solving the technical problem of cumbersome maintenance when the electrical connection device of the charging socket is damaged.

### BRIEF DESCRIPTION OF THE DRAWINGS

The drawings below are only intended to schematically illustrate and demonstrate the present disclosure, and do not limit the scope of the present disclosure:
FIG. 1 is a schematic diagram illustrating a charging socket provided by the present disclosure;
FIGS. 2-4 are exploded diagrams illustrating the charging socket illustrated in FIG. 1;
FIG. 5 is a schematic diagram illustrating a DC connector and a screw mating with the DC connector in the charging socket provided by the present disclosure; and
FIGS. 6-8 are schematic diagrams illustrating a device fixed to an automobile body in the charging socket provided by the present disclosure.

### DETAILED DESCRIPTION

In order to provide a clearer understanding of the technical features, objective and effects of the present disclosure, embodiments of the present disclosure are currently described with reference to the drawings. Unless otherwise specified, "a plurality of" device two or more in the description of the present disclosure.

### Embodiment I

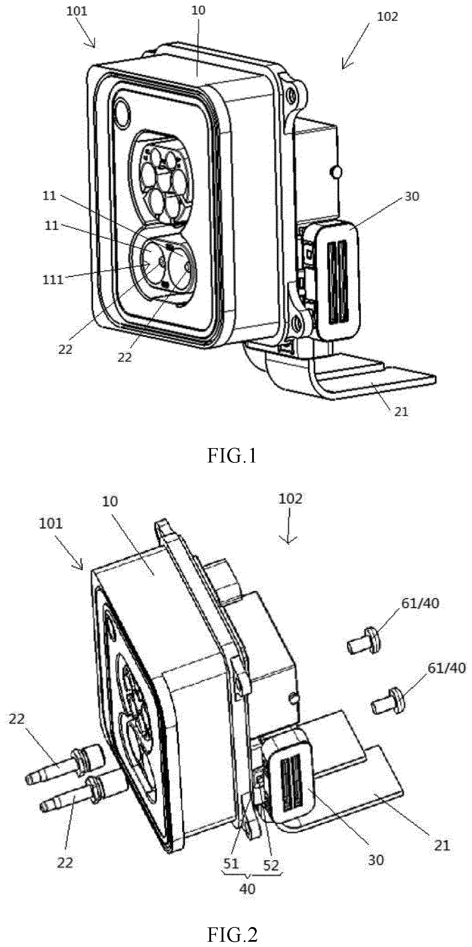

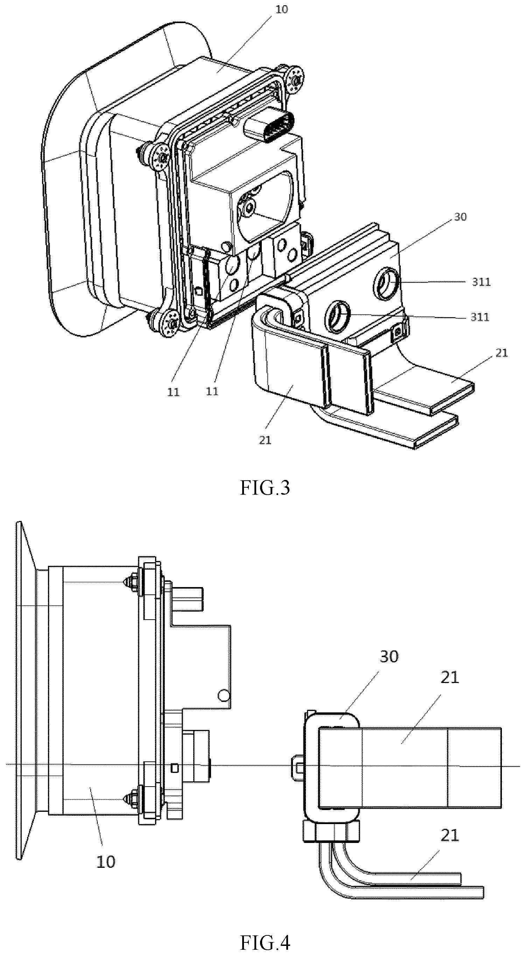

The present disclosure provides a charging socket, as illustrated in FIGS. 1 and 3, the charging socket includes: a device 10 fixed to an automobile body, a current connector 30, a cable 21 and a detachable mechanism 40, a mounting hole 11 is disposed on the device 10 fixed to an automobile body; a current connector 30 partially disposed in the mounting hole 11; an electrical connection device 22 disposed in the current connector 30; a cable 21 partially disposed in the current connector 30 and a detachable mechanism 40 configured to detachably fix the current connector 30, a part of the cable 21 and the electrical connection device 22 to the device 10 fixed to the automobile body.

In the charging socket, the electrical connection device 22 is in a position where the device 22 is frequently plugged and unplugged from a charging device, and is also a main component that conducts a charging current. During prolonged use, not only frequent plugging and unplugging operations result in deformation and coating damage of the electrical connection device 22, or even ignition and melting of the electrical connection device 22 as a result of an excessive current, as a result, the electrical connection device 22 cannot achieve functions thereof. In addition, the electrical connection device 22, when exposed to an external environment, may be corroded by water or salt in the environment, so that electrical properties of the electrical connection device 22 fail to meet the requirements. Therefore, in the entire charging socket, the electrical connection device 22 is the most vulnerable component, however, in most of the existing charging sockets, the electric connection device 22 is fixedly mounted on a charging socket body and is welded with the cable 21. In a case where the electrical connection device 22 is damaged, the electrical connection device 22, the fixing portion and the cable 21 need to be entirely removed from the charging socket and replaced, even in severe cases, the entire charging socket needs to be replaced with cumbersome maintenance, long man-hours and high maintenance cost, which is one of the main issues currently restricting the development of rechargeable automobile.

In the charging socket provided by the present disclosure, when the electrical connection device 22 is damaged, only the rear cover of the charging socket needs to be removed, the electrical connection device 22 and the cable 21 are detaching from the charging socket, the electrical connection device 22 is replaced and then mounted without removing the entire charging socket or replacing the cable 21, thereby solving the technical problem of cumbersome maintenance work when the electrical connection device 22 of the charging socket is damaged.

As illustrated in FIGS. 1 and 2, the current connector 30 is disposed at a rear end 102 of the device 10 fixed to the automobile body, the electrical connection device 22 is disposed at a front end 101 of the device 10 fixed to the automobile body, and the electrical connection device 22 is connected to the current connector 30. The electrical connection device 22 may be a terminal. The current connector 30 may be a DC connector or an AC connector. The charging socket may include: a DC connector and/or an AC connector.

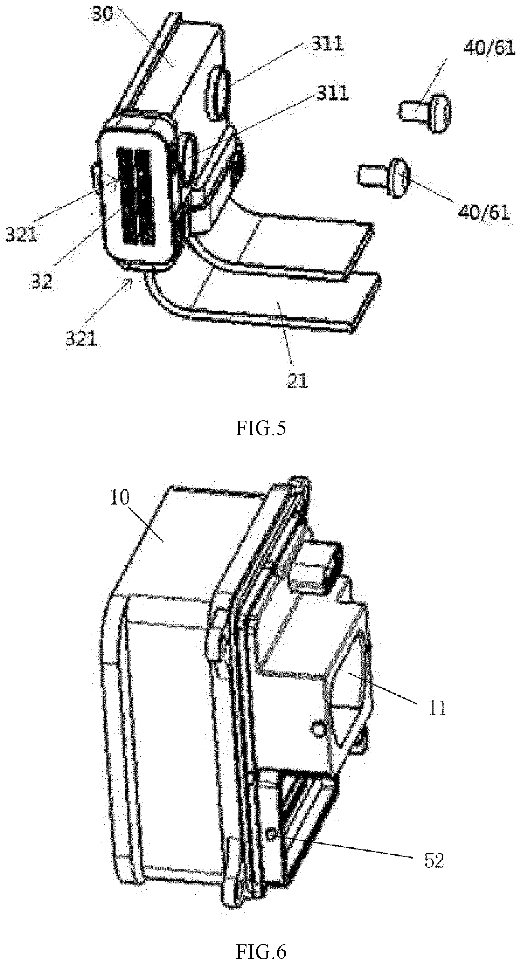

In one embodiment, as illustrated in FIG. 3 or FIG. 5, the current connector 30 includes a connection hole 311 through which the detachable mechanism 40 passes. The connection hole 311 may be a circular through hole, or a U-shaped groove disposed on the current connector 30. The detachable mechanism 40 passes through the connection hole 311 and may fix the current connector 30 on the charging socket, so as to avoid the malfunction of the charging socket due to the movement of the current connector 30.

In one embodiment, the current connector 30 is provided with a mounting portion, and the device 10 fixed to the automobile body is provided with a mounting hole 11, and the mounting portion is inserted into the mounting hole 11 and detachably connected. When the current connector 30 needs to be assembled with the device 10 fixed to the automobile body, if no corresponding positioning mechanism exists, an assembly operator may take a long time to assemble the current connector 30 and the device 10 fixed to the automobile body to a mounting position, and when the detachable mechanism 40 is used to fix the current connector 30 to the device 10 fixed to the automobile body, a relative positional shift may occur and results in assembly failure.

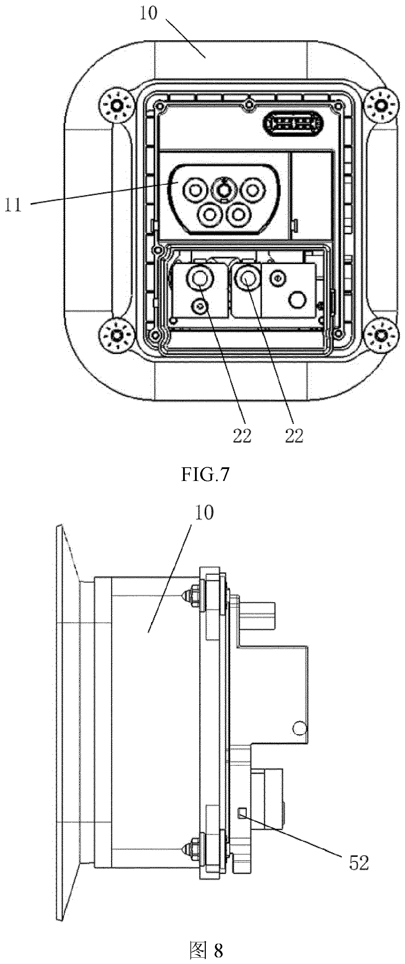

As illustrated in FIGS. 1, 4 and 7, the mounting portion of the current connector 30 is formed with a body of the current connector 30 in a stepped shape, the mounting portion is inserted into the mounting hole 11 and can be detachably connected to realize positioning coordination between the current connector 30 and the device 10 fixed to the automobile body, in order to facilitate disassembly and assembly thereof.

In one embodiment, the detachable mechanism 40 includes a screw 61, the electrical connection device 22 is provided with a fixing portion, an end surface of the fixing portion is provided with a threaded hole, and one end of the cable 21 is provided with a through hole, and a hole diameter of the through hole is larger than an outer diameter of the screw 61 and smaller than an outer diameter of the connection hole 311 of the electrical connection device 22, the screw 61 is threaded through the through hole and the connection hole 311 or the U-shaped groove and screwed into the threaded hole to fix the electrical connection device 22, one end of the cable 21 and the current connector 30 on the device 10 fixed to the automobile body. The electrical connection device 22 is connected to the one end of the cable 21 by a screw, and the screw 61 may be directly removed when the electrical connection device 22 is damaged, and the electrical connection device 22 may be replaced.

Further, an end surface of the threaded hole of the electrical connection device 22 is electrically connected to a side surface of the cable 21. In order to realize the conduction of the charging current of the charging socket, the electrical connection device 22 is sufficiently electrically connected to the cable 21. Therefore, the electrical connection device 22 needs to have a sufficient area in contact with the cable 21, and the contact resistance at the connection is lower than the conductor resistance of the cable 21 itself as much as possible.

Further, an outer diameter of the fixing portion is smaller than an inner diameter of the connection hole 311. Since the electrical connection device 22 and the cable 21 are located on both sides of the current connector 30, respectively, if the outer diameter of the fixing portion is greater than or equal to the inner diameter of the connection hole 311, the electrical connection device 22 cannot pass through the connection hole 311 and is electrically connected to the cable 21, then the basic charging function of the charging socket cannot be realized. Therefore, only when the outer diameter of the fixing portion is smaller than the inner diameter of the connection hole 311, the electrical connection device 22 can pass through the connection hole 311 of the current connector 30 and can be electrically connected to the cable 21.

As illustrated in FIGS. 3 and 5, the current connector 30 includes the connection hole 311 through which the detachable mechanism 40 passes. The electrical connection device 22 is accommodated in the connection hole 311. The current connector 30 is disposed on the rear end 102 of the device 10 fixed to the automobile body, the electrical connection device 22 is disposed on the front end 101 of the device 10 fixed to the automobile body, and the electrical connection device 22 is mounted in the connection hole 311 to realize that the electrical connection device 22, the current connector 30 and the device 10 fixed to the automobile body are locked together.

Further, a torque of the screw 61 screwed into the threaded hole ranges from 0.1N·m to 30N·m.

In order to verify the torque range of the screw 61 screwed into the threaded hole and the effect on the electrical connection performance of the electrical connection device 22 and the cable 21, the inventor selected the same electrical connection device 22, current connector 30, screw 61 and cable 21, tightened the electrical connection device 22, current connector 30, screw 61 and cable 21 together with different torques, and tested the contact resistance of the electrical connection device 22 and the cable 21 separately, and assess a connection status between the electrical connection device 22 and the cable 21 after undergoing vibration test. The test results are shown in Table 1.

The method of testing the contact resistance between the electrical connection device 22 and the cable 21 includes: using a micro-ohmmeter, placing one end of a measuring terminals of the micro-ohmmeter on the cable 21, and placing the other end on the electrical connection device 22, and ensuring consistent positioning for each measurement, and then recording a contact resistance reading from the micro-ohmmeter. In this embodiment, a contact resistance that is greater than 1mΩ is unqualified.

The vibration test is to place a connected sample on a vibration test table, and subjecting them to 300 vibration cycles, with vibrations applied in 6 directions at a frequency of 100Hz and an acceleration of 40m/s2 in one direction during each cycle, and then whether the electrical connection device 22 is loose from the cable 21 is observed. In this embodiment, the electrical connection device 22 that is loose from the cable 21 or is damaged during mounting is unqualified.

**Table 1 - effects of different torques on contact resistance and connection:**

| torque of the screw 61 screwed into the threaded hole (N+m) | | | | | | | | | | | | | |
|---|---|---|---|---|---|---|---|---|---|---|---|---|---|
| 0.01 | 0.05 | 0.1 | 0.5 | 1 | 3 | 5 | 10 | 15 | 20 | 25 | 30 | 32 | 35 |

| contact resistance between the electrical connection device 22 and the cable 21 (mΩ) | | | | | | | | | | | | | |
|---|---|---|---|---|---|---|---|---|---|---|---|---|---|
| 1.16 | 1.05 | 0.96 | 0.94 | 0.91 | 0.87 | 0.85 | 0.83 | 0.80 | 0.77 | 0.74 | 0.71 | damaged | damaged |

| connection between the electrical connection device 22 and the cable 21 | | | | | | | | | | | | | |
|---|---|---|---|---|---|---|---|---|---|---|---|---|---|
| loose | loose | not loose | not loose | not loose | not loose | not loose | not loose | not loose | not loose | not loose | not loose | damaged | damaged |

As can be seen from the Table 1, when a torque value of the screw 61 screwed into the threaded hole is less than 0.1N·m, a contact resistance value of the electrical connection device 22 and the cable 21 is unqualified, and the electrical connection device 22 is loose from the cable 21 after the vibration test, therefore, the inventor set a minimum value of the torque range of the screw 61 screwed into the threaded hole to be 0.1N m. When the torque value of the screw 61 screwed into the threaded hole is greater than 30N·m, too much torque is applied to the cable 21, the current connector 30 and the electrical connection device 22 due to an excessive torque, thus the plastic current connector 30 is damaged under high pressure, so that the basic functions of the charging socket cannot be realized. Therefore, the inventor determined that the torque of the screw 61 screwed into the threaded hole ranged from 0.1N m to 30N·m.

In one embodiment, a number of the screw 61 is exemplarily 2-36. In the charging socket, the current connector 30 may be a DC connector or an AC connector. Both the DC connector and the AC connector contain two main charging cables 21 and two corresponding electrical connection device 22, which mainly function to conduct a large charging current. Generally, the charging cable 21 has a diameter of 60mm²-260mm², and other lines are low-voltage control cables with a small current, and the cable 21 also has a small diameter range. During the use of the charging socket, the electrical connection device 22 that conducts a charging current is much more likely to be damaged than the electrical connection device 22 on a low-voltage control cable that conducts a small current. Thus, only providing the two electrical connection device 22 that conducts the charging current as a detachable mechanism in a screw structure can greatly save costs and facilitate maintenance of the charging socket. Exemplarily, when the charging socket includes: the DC connector and the AC connector, 36 electrical connection device 22 can exist in total, and the electrical connection device 22 can be configured as the detachable mechanism in the screw structure, no matter which circuit of the charging socket is damaged, it can be quickly replaced, in order to save maintenance time and reduce maintenance costs.

In one embodiment, the current connector 30 is provided with a cable slot 32, into which the cable 21 is threaded, and which is constructed to prevent the cable 21 from moving in a direction along a front end 101 pointing towards a rear end 102. One of the purposes of providing the cable slot 32 is to quickly mount the cable 21 so that the cable can be threaded through the cable slot 32, and the through hole at one end of the cable 21 can also be quickly aligned with the connection hole 311 for easy threading of the screw 61; the other is to position front and rear positions of the cable 21 in the cable slot 32, in order to connect the cable 21 and the current connector 30 together, and avoid disengaging the cable 21 from the current connector 30 during mounting.

As illustrated in FIGS. 3 and 5, the cable slot 32 is provided with a cable outlet 321, and the cable 21 is threaded into the cable slot 32 through the cable outlet 321, so as to facilitate feeding and assembly of the cable 21 from the current connector 30 and the device fixed to the automobile body, and the mounting position of the cable 21 may be sealed to ensure that the charging socket is waterproof, user-friendly, which improves the assembly efficiency.

The cable outlet 321 may limit an exit position and an exit direction of the cable 21. In one embodiment, the cable outlet 321 is disposed towards a side of the current connector 30. The cable outlet 321 is vertically disposed. As illustrated in FIG. 5, The cable 21 exits in the vertical direction, and cable 21 is capable for bending. In one embodiment, the cable outlet 321 is arranged horizontally, and the cable 21 exits in the horizontal direction and is capable of bending and prevented from obscuring the screw 61. Further, the cable slot 32 is provided with at least two sets of the cable outlet 321, one of which is vertically arranged, and the other is horizontally arranged. In use, one of the sets may be selected to arrange the cable 21, facilitating alignment of the exit direction of the cable 21 with the installation environment.

In one embodiment, the direction of the cable outlet 321 is at an angle to the direction of the side of the current connector 30. In the mounting environment of the charging socket, the exit direction of the cable 21 of the charging socket is not necessarily at the rear or side of the charging socket, and may also be at an angle to an axial direction of the charging socket, and the direction in which the cable outlet 321 of the current connector 30 can be directly set to align with the direction required for cable 21 to exit in the mounting environment, thus the cable 21 is prevented from being bent again, and can also be directly mounted during mounting process to avoid a situation where the high rigidity of the cable may prevent bending during mounting .

In one embodiment, as illustrated in FIGS. 6-8, the detachable mechanism 40 includes a card slot 52 disposed on the device 10 fixed to the automobile body, and a snap-in tab 51 disposed on the current connector 30, the snap-in tab 51 is snapped into the card slot 52 to fix the current connector 30 to the device 10 fixed to the automobile body, which is easy to operate, thus automatic production and batch production are readily achieved. The snap-in tab 51 and the card slot 52 can realize pre-fixation between the current connector 30 and the device 10 fixed to the automobile body for subsequent fastening operations.

Further, a notch of the card slot 52 faces sideways, and the snap-in tab 51 moves along with the current connector 30 in a direction along the rear end 102 pointing towards the front end 101 until the snap-in tab 51 is snapped into the card slot 52. The snap-in tab 51 is engaged with the card slot 52 by pressing the current connector 30, while the current connector 30 is engaged with the device 10 fixed to the automobile body, which is implemented in a convenient and efficient manner.

Further, the snap-in tab 51 is disposed on a side of the current connector 30, and the position of the card slot 52 corresponds to that of the snap-in tab 51, so that the snap-in tab 51 and the card slot 52 are readily matched.

In one embodiment, the detachable mechanism 40 includes a spring and a hook disposed on the device 10 fixed to the automobile body, and a groove disposed on the current connector 30, and the current connector 30 is pressed so that the groove is engaged with the hook or disengaged from the hook, and the spring disengages the current connector 30 from the device 10 fixed to the automobile body. With this structure, the current connector 30 and the device 10 fixed to the automobile body can be assembled and disassembled without tools, so as to reduce steps during maintenance, save man-hours for disassembly and improve maintenance efficiency.

In one embodiment, the mounting hole 11 includes a limiting portion 111 matched with a terminal of the electrical connection device 22, and an inner diameter of the limiting portion 111 is smaller than an outer diameter of the end of the electrical connection device 22 to prevent the electrical connection device 22 from moving towards the rear end 102 and position the electrical connection device 22. If no limiting portion 111 exists, when the electrical connection device 22, the current connector 30 and the cable 21 are assembled, the electrical connection device 22 may pass through the mounting hole 11 and may be connected to the current connector 30 and the cable 21 as a whole, and may not be fixed on the device 10 fixed to the automobile body, so that the entire charging socket structure cannot be assembled.

In one embodiment, a baffle ring is arranged in the mounting hole 11, and is configured to prevent the electrical connection device 22 from moving in a direction from the rear end 102 to the front end 101. The forward and backward movement of the electrical connection device 22 are limited by the baffle ring, in order to ensure smooth plugging and unplugging of the electrical connection device 22.

As illustrated in FIGS. 1 and 2, the charging socket includes a plurality of electrical connection device 22. According to the manufacturing standards of the charging socket in various countries, the plurality of electrical connection device 22 can realize charging functions, grounding functions, low-voltage control functions, respectively.

In one embodiment, the charging socket may include a plurality of detachable mechanisms 40, and the detachable mechanisms 40 correspond one-to-one with the electrical connection device 22. A plurality of corresponding electrical connection device 22 may be respectively mounted by the plurality of detachable mechanisms 40, on the device 10 fixed to the automobile body, in order to realize an electrical connection between the plurality of electrical connection device 22 and the charging device.

A number of the electrical connection device 22 is exemplarily 2-36. The electrical connection device 22 may be simplified to only two charging cables for charging, and other circuits may be integrated into the charging device or battery. The corresponding electrical connection device 22 in the 36 circuits of the DC connector and the AC connector may also be included. Meanwhile, the number of the electrical connection device 22 may be the same as the number of the screw 61.

Exemplarily, the cable 21 is made of copper or copper alloy, aluminum or aluminum alloy. Electric automobile cables require a large-diameter wire for current conduction due to high voltage and high current. Copper conductor materials have good electrical conductivity and good ductility, and are ideal conductor materials for cable. However, the cost of copper as a wire material may be increasingly high as the price of copper increases day by day. For this reason, people begin to search for an alternative to metallic copper to reduce cost. The content of metallic aluminum in the crust is about 7.73%, the price is low after the refining technology is optimized, aluminum is lighter than copper, and has conductivity second only to copper. Aluminum may replace part of copper in the field of electrical connections. Therefore, replacing copper with aluminum in the field of automotive electrical connections becomes a development trend.

The device 10 fixed to the automobile body and the current connector 30 are made of plastic. The plastic material is selected. First, the production method of injection molding may be adopted to obtain the device 10 fixed to the automobile body and the current connector 30 with complicated shapes and consistent product performance. In addition, high insulation properties of the plastic material can also ensure insulation properties of the charging socket in use.

In one embodiment, a temperature sensor and a control board are disposed on the current connector 30, the temperature sensor is electrically connected to the control board through a data line, and the temperature sensor transmits a temperature signal to the control board to monitor the temperature of the current connector 30 in order to avoid damage caused by an excessive temperature. In addition, the temperature sensor may be directly connected to the electrical connection device 22 and obtain a temperature value of the electrical connection device 22 in real time, and transmit the temperature value to the control board, the temperature value of the electrical connection device 22 is controlled through the adjustment of the charging current by the control board, so that the electrical connection device 22 has a measurement accuracy of the temperature close to or equal to a theoretical absolute value, and has extremely high detection accuracy and fast output capability.

Further, the control board is a circuit board, and the circuit board has a built-in control logic circuit. In view of the control logic circuit, when the temperature detected by the temperature sensor is higher than a set temperature, the control board transmits a warning message to monitor the temperature in real time; and when the temperature detected by the temperature sensor exceeds the set temperature by a value, the current connector 30 of the control board is automatically disconnected to avoid danger caused by an excessive temperature.

Specifically, the temperature sensor may be an NTC temperature sensor or a PTC temperature sensor. Advantages of using these two types of temperature sensors are that the temperature sensors are small in size, can measure gaps that cannot be measured by other thermometers and are user friendly and the resistance value may be arbitrarily chosen from 0.1kΩ to 100kS2; the temperature sensors are easily processed into complex shapes and can be mass-produced, have good stability and strong overload capacity, are suitable for use in a product such as an adapter that requires a small size and stable performance.

The charging socket can be applied to new energy automobiles.

### Embodiment II

The present disclosure also involves an automobile, including the charging socket mentioned above. Both the simple manufacturing process and the workability significantly reduce the man-hours of the charging socket; and in the use of the automobile, if only the electrical connection device in the charging socket is damaged, there is no need to dismantle the entire charging socket and scrap the cables, but only need to remove a part of the structure of the charging socket and replace the damaged electrical connection device. The simple maintenance process, short man-hours, and low maintenance cost significantly reduce the cost and maintenance expenses of the automobile involved in the present disclosure.

Those described above are only the schematic embodiments of the present disclosure, rather than limitations thereto. For those skilled in the art, any equivalent variation and amendment made without departing from the concept and principle of the present disclosure shall fall within the scope of protection of the present disclosure.

## Claims

1. A charging socket comprising:
a device fixed to an automobile body, on which a mounting hole is disposed;
a current connector partially disposed in the mounting hole;
an electrical connection device disposed in the current connector;
a cable partially disposed in the current connector; and
a detachable mechanism configured to detachably fix the current connector, a part of the cable and the electrical connection device to the device fixed to the automobile body.

2. The charging socket according to claim 1, wherein the current connector comprises a connecting hole or a U-shaped groove, and the detachable mechanism passes through the connecting hole or the U-shaped groove.

3. The charging socket according to claim 1, wherein the current connector is provided with a mounting portion, the device fixed to the automobile body is provided with the mounting hole, and the mounting portion is inserted into the mounting hole and detachably connected.

4. The charging socket according to claim 2, wherein the detachable mechanism comprises a screw, the electrical connection device is provided with a fixing portion, of which an end surface is provided with a threaded hole, the cable is provided with a through hole, the screw is threaded through the through hole and the connecting hole or the U-shaped groove and is screwed into the threaded hole.

5. The charging socket according to claim 4, wherein an end surface of the threaded hole of the electrical connection device is electrically connected to a side surface of the cable.

6. The charging socket according to claim 4, wherein an outer diameter of the fixing portion is smaller than an inner diameter of the connecting hole.

7. The charging socket according to claim 4, wherein a torque of the screw screwed into the threaded hole ranges from 0.1N m to 30N·m.

8. The charging socket according to claim 4, wherein a number of the screw is 2-36.

9. The charging socket according to claim 1, wherein the current connector is provided with a cable slot, into which the cable is threaded, and which is constructed to prevent the cable from moving in a direction along a front end of the charging socket pointing towards a rear end of the charging socket.

10. The charging socket according to claim 9, wherein the cable slot is provided with a cable outlet, and the cable is threaded into the cable slot through the cable outlet.

11. The charging socket according to claim 10, wherein the cable outlet is arranged in a direction towards a side of the current connector.

12. The charging socket according to claim 10, wherein the direction of the cable outlet is at an angle to the direction of the side of the current connector.

13. The charging socket according to claim 1, wherein the detachable mechanism comprises a card slot disposed on the device fixed to the automobile body, and a snap-in tab disposed on the current connector, and the snap-in tab is snapped into the card slot to fix the current connector to the device fixed to the automobile body.

14. The charging socket according to claim 13, wherein a notch of the card slot faces sideways, and the snap-in tab moves along with the current connector in a direction along a rear end of the charging socket pointing towards a front end of the charging socket until the snap-in tab is snapped into the card slot.

15. The charging socket according to claim 14, wherein the snap-in tab is disposed on a side of the current connector.

16. The charging socket according to claim 1, wherein the detachable mechanism comprises a spring and a hook disposed on the device fixed to the automobile body, and a groove disposed on the current connector, the current connector is pressed so that the groove is engaged with the hook or disengaged from the hook, and the spring disengages the current connector from the device fixed to the automobile body.

17. The charging socket according to claim 1, wherein the mounting hole comprises a limiting portion matched with an end of the electrical connection device.

18. The charging socket according to claim 1, wherein a baffle ring is arranged in the mounting hole, and is constructed to prevent the electrical connection device from moving in a direction along a rear end of the charging socket pointing towards a front end of the charging socket.

19. The charging socket according to claim 1, wherein the charging socket comprises a plurality of the electrical connection device.

20. The charging socket according to claim 19, wherein the charging socket comprises a plurality of the detachable mechanisms, and the detachable mechanisms correspond one-to-one with the electrical connection device.

21. The charging socket according to claim 1, wherein a number of the electrical connection device is 2-36.

22. The charging socket according to claim 1, wherein the cable is made of copper or copper alloy, aluminum or aluminum alloy.

23. The charging socket according to claim 1, wherein the device fixed to the automobile body and the current connector are made of plastic.

24. The charging socket according to claim 1, wherein a temperature sensor and a control board are disposed on the current connector, and the temperature sensor is electrically connected to the control board through a data line.

25. The charging socket according to claim 24, wherein the control board is a circuit board, and the circuit board has a built-in control logic circuit.

26. The charging socket according to claim 25, wherein the temperature sensor is an NTC temperature sensor or a PTC temperature sensor.

27. An automobile, comprising the charging socket according to any one of claims 1-26.
